# EUROPEAN PATENT APPLICATION

(11) **EP 1 645 474 A1**
(43) Date of publication of application: **12.04.2006**
(21) Application number: 04024175.4
(22) Date of filing: 11.10.2004
(51) Int. Cl.: B60R 9/06, B60R 9/10

(54) **Securing device for bicycle racks**

(71) Applicant: Wang, Chiu-Kuei, YuanLi Town, MiaoLih Hsien (TW)
(72) Inventor: Wang, Chiu-Kuei, YuanLi Town, MiaoLih Hsien (TW)
(74) Representative: Robba, Pierpaolo

(57) **Abstract**

A bicycle rack includes a main frame (20) connected to an upright post (100) and the ball (12) on the rod (11) connected to the vehicle is located between two side plates (22) and clamped by two clamping members (30,31). A pressing plate (50) has an upright plate (51) located between the two side plates (22) and a horizontal plate (52) which is connected to a holding member (60). A positioning bar (40) has a cam section (41) for pressing the pressing plate (50) to push one of the two clamping members (30,31) to clamp the ball (12). A U-shaped retaining member (70) is engaged with the rod (11) and is connected to the holding member (60) by using a U-shaped retaining piece (70). The ball (12) and the rod (11) are both secured so as to prevent the bicycle rack from shaking.

## Description

### FIELD OF THE INVENTION

The present invention relates to a securing device for preventing the bicycle rack attached to a vehicle from shaking.

### BACKGROUND OF THE INVENTION

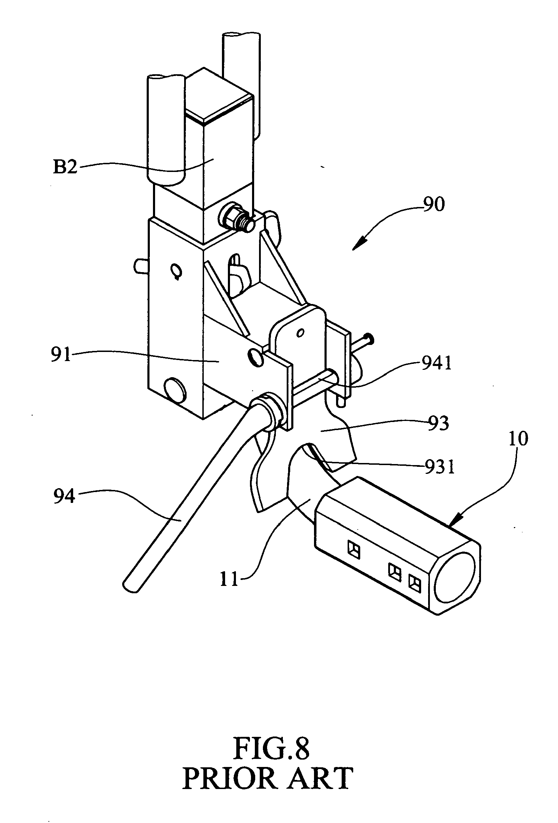

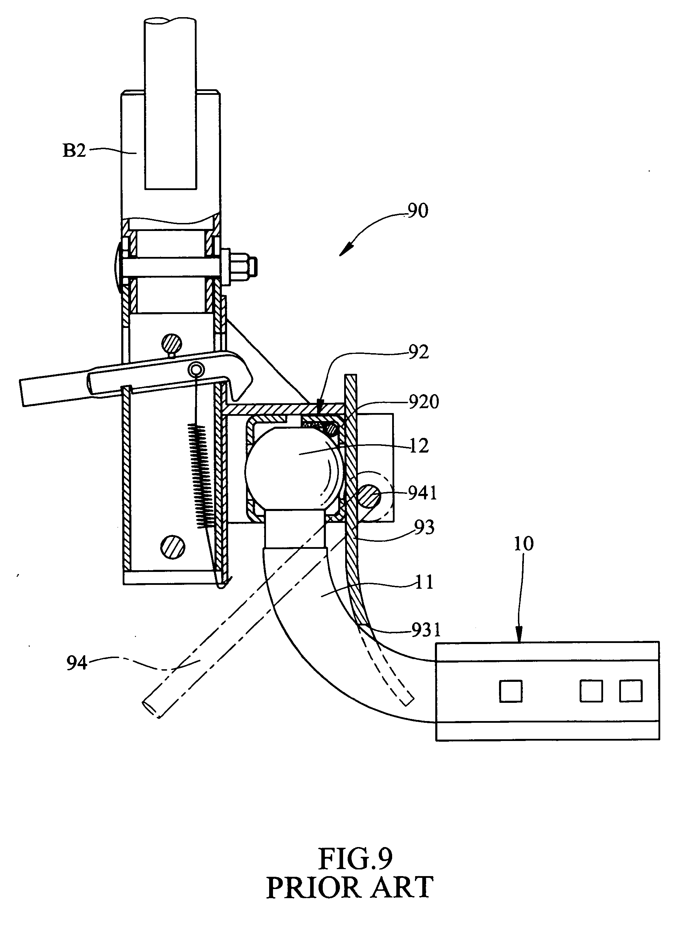

A conventional bicycle rack on vehicles for carrying bicycles is shown in Figs. 8 and 9 and generally includes a main frame 90 connected to a post "B2" of the rack and the main frame 90 includes two side plates 91 between which the ball 12 connected to the rod 11 of a connection member 10 is positioned by a clamping mechanism 92. The connection member 10 extends from the vehicle which is not shown. A pressing plate 93 has one end located between the two side plates 91 and the other end of the pressing plate 93 includes a fork portion 931 so as to engage the rod 11 extending from the connection member 10. A positioning bar 94 includes a section which extends through the two side plates 91 and includes a cam surface 941. By pivoting the positioning bar 94, the cam surface 941 is matched with the outside of the pressing plate 93, in this position, the U-shaped clamping member 920 pressed by the pressing plate 93 is not pressed by the pressing plate 93 and can be pivoted counter clockwise to release the ball 12 from the clamping mechanism 92. When pivoting the positioning bar 94 clockwise, the arc portion of the section presses the pressing plate 93 to press the clamping member 920 such that the ball 12 is well clamped.

It is experienced that the ball 12 is not well clamped by the clamping mechanism 92 and the weight of the bicycles carried by the bicycle rack is located at a certain distance above from the main frame 90 so that the connection between the main frame 90 and the ball 12 is not stable and generates a lot of noise.

The present invention intends to provide a securing device for a bicycle rack wherein the rod of the connection member is well positioned to minimize the shaking.

### SUMMARY OF THE INVENTION

The present invention relates to a bicycle rack that comprises a main frame connected to an upright post and a first clamping member fixed between two side plates of the main frame and a second clamping member is pivotably connected between the two side plates. The ball on a rod is clamped between the first and second clamping members. A pressing plate has an upright plate located between the two side plates, and a horizontal plate which is connected to the upright plate and is connected to a holding member. A positioning bar has a cam section which extends through the two side plates and presses on an outer surface of the pressing plate. A U-shaped retaining member has a top plate, a bottom plate and a connection plate connected between the top plate and the bottom plate. Each of the top plate and the bottom plate has a recess with which the rod is engaged. A U-shaped retaining piece has two extensions and the rod is engaged between the two extensions. The two extensions extend through holes in the connection plate of the retaining member and are secured to the holding member.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a side view of the bicycle rack of the present invention;
Fig. 2 is a perspective view to show the securing device of the bicycle rack of the present invention;
Fig. 3 is an exploded view to show the securing device of the bicycle rack of the present invention;
Fig. 4A is a cross sectional view to show that the securing device wherein the ball is not yet connected to the securing device;
Fig. 4B is a cross sectional view to show that the ball is to be clamped by the two clamping members, wherein one of the clamping members is pivoted;
Fig. 4C is a cross sectional view to show that the ball is clamped by the two clamping members;
Fig. 5A is a cross sectional view to show that the pressing plate is to be installed;
Fig. 5B shows that the pressing plate is installed to contact the clamping member;
Fig. 5C shows that the pressing plate is positioned by installing the positioning bar;
Fig. 5D shows that the pressing plate is pushed toward the clamping member by pivoting the positioning bar;
Fig. 6A shows the retaining member is to be engaged with the rod;
Fig. 6B shows that a holding member is located beside the retaining member;
Fig. 6C shows that the retaining piece connects the rod, the retaining member and the holding member together;
Fig. 6D shows that the retaining piece is connected with two nuts;
Fig. 6E shows that a pin extends through two lugs of the holding member;
Fig. 7 shows the bicycle rack is connected to a vehicle;
Fig. 8 shows a conventional securing device for bicycle rack, and
Fig. 9 shows the positioning bar is pivoted to press the pressing plate.

### DETAILED DESCRIPTION OF THE PREFERRED EMBODIMENT

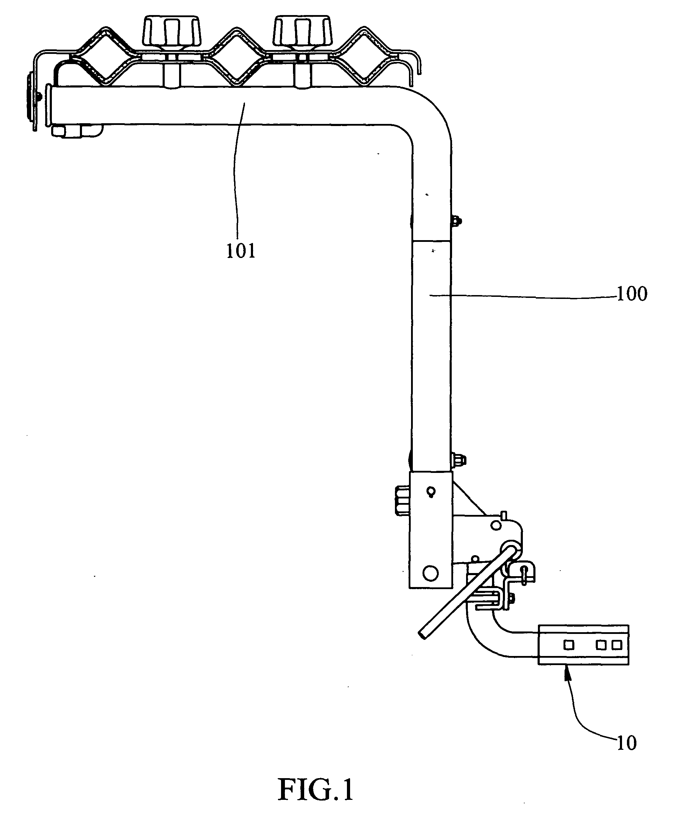

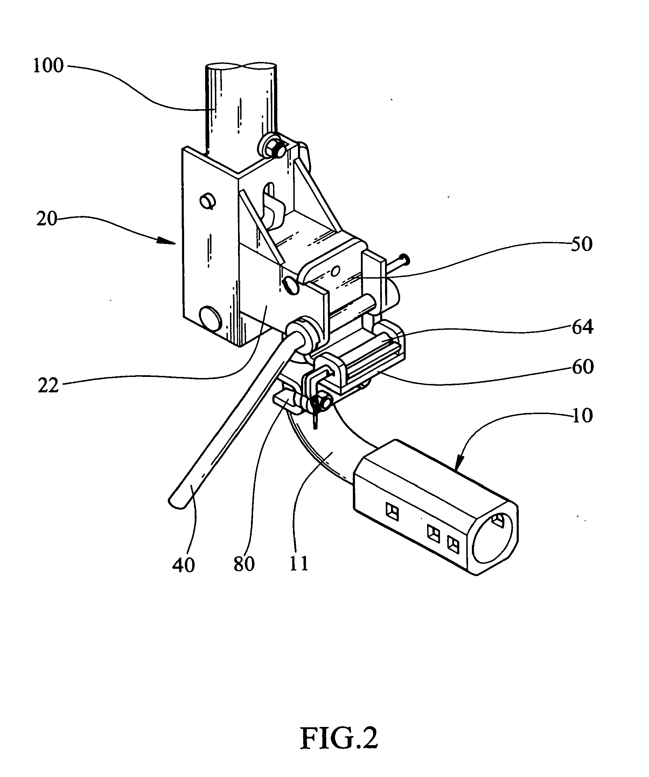

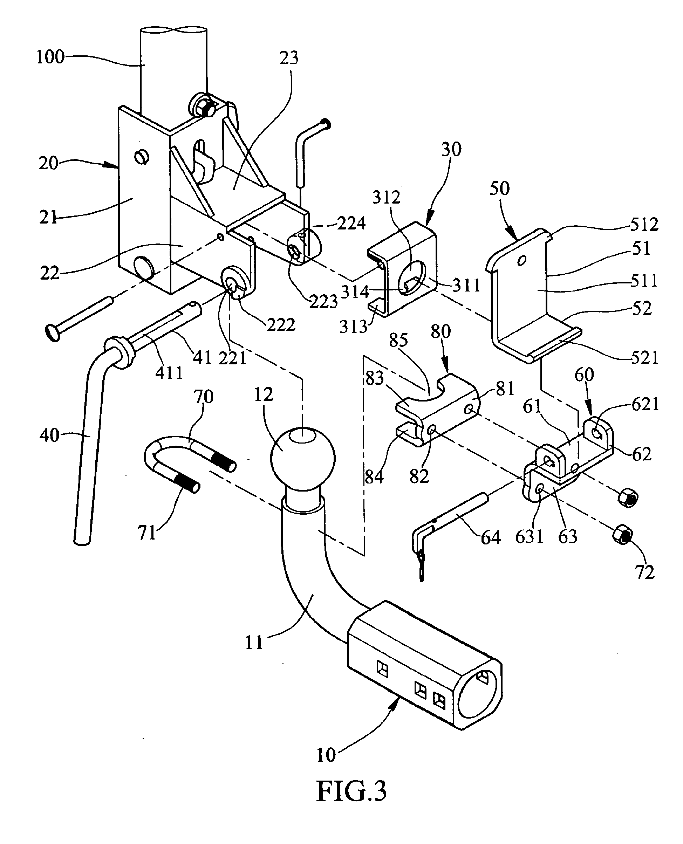

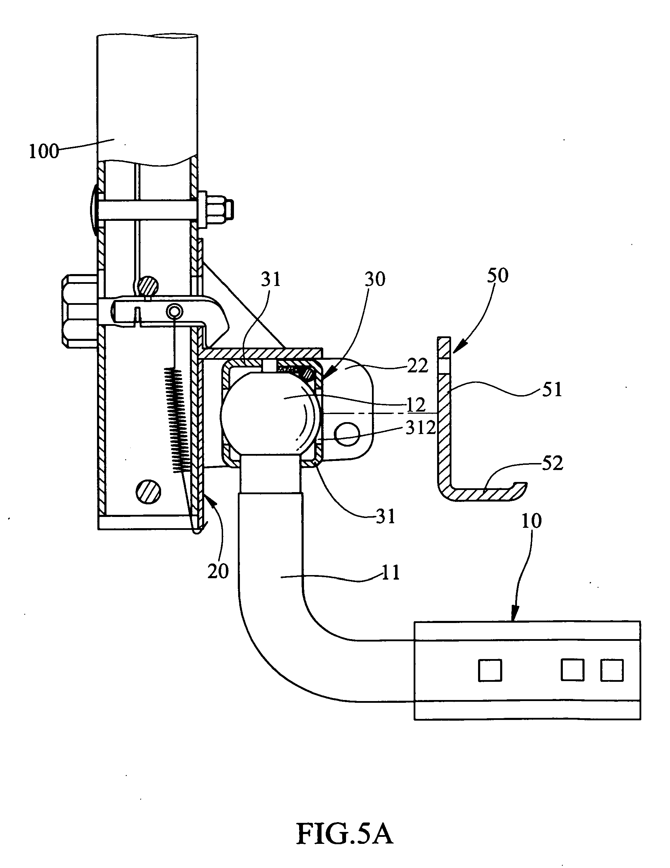

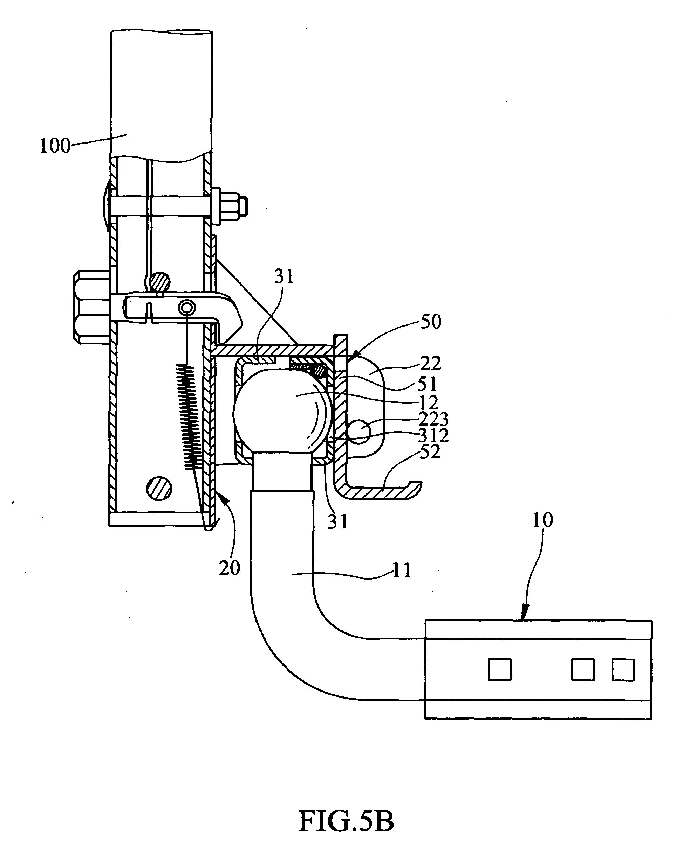

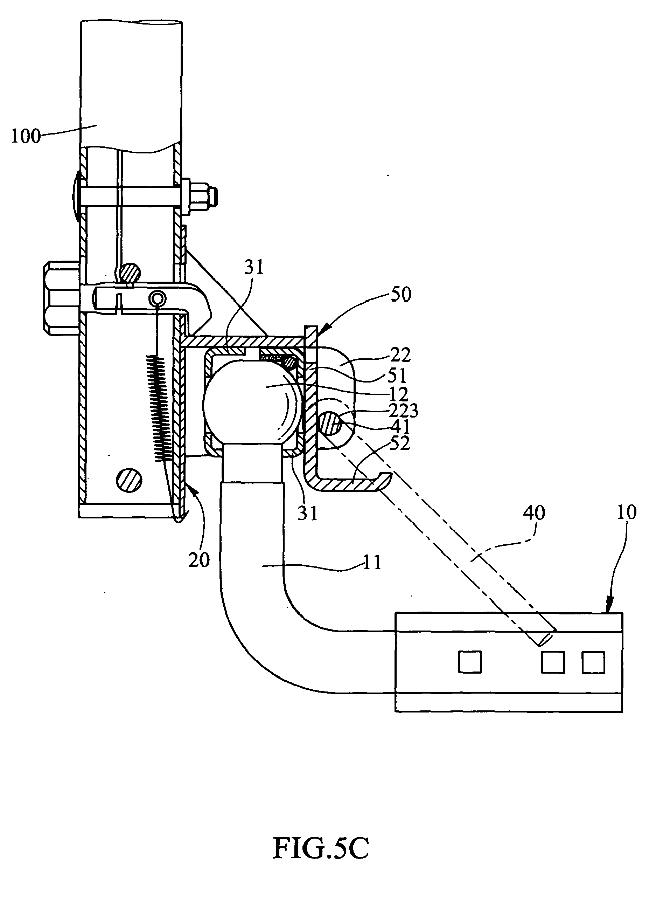

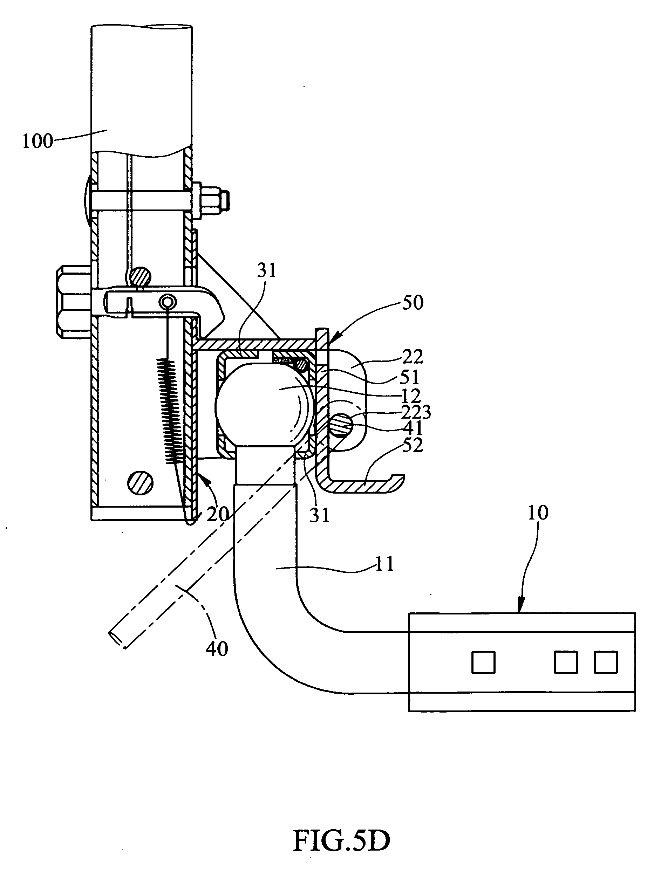

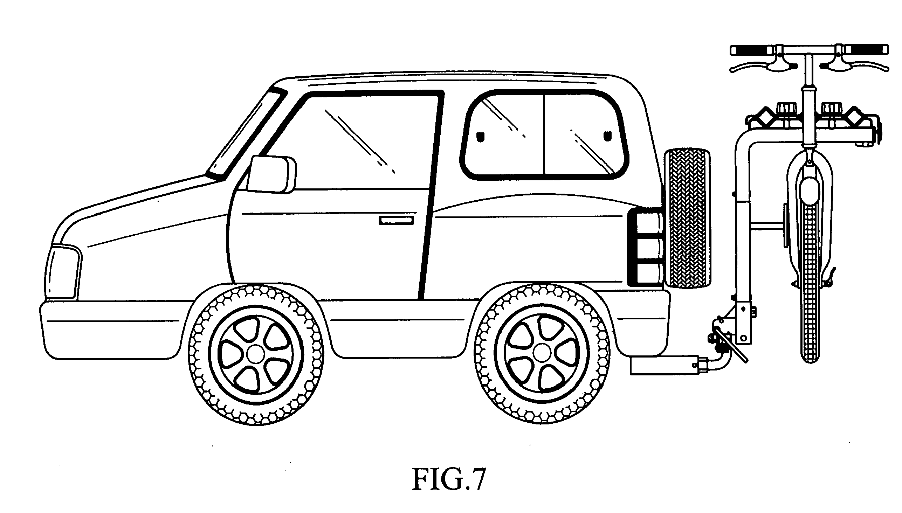

Referring to Figs. 1 to 7, the bicycle rack of the present invention is connected to a vehicle as shown in Fig. 7 and carries at least one bicycle thereon. The bicycle rack comprises a main frame 20 which is connected to an upright post 100 of the bicycle rack and an extension tube 101 is connected to the upright post 100. Three clamp devices are connected to the extension tube 101 so as to secure bicycles thereon. The main frame 20 has two side plates 22 between which a top plate 23 is connected. A first clamping member 31 is fixed between the two side plates 22 and a second clamping member 30 is pivotably connected between the two side plates 22. Each of the first clamping member 31 and the second clamping member 30 is U-shaped member and includes a top plate, a bottom plate 313 and a connection plate 311 connected between the top plate and the bottom plate 313. The bottom plate 313 has a recess 314 and the connection plate 311 has a hole 312.

A pressing plate 50 has an upright plate 51 and a horizontal plate 52 which is connected to the upright plate 51. The upright plate 51 is located between the two side plates 22 and includes two protrusions 512 on two sides thereof, the two protrusions 512 are rested on two top edges of the two side plates 22. The horizontal plate 52 includes a ridge 521 extending from a top surface thereof and is connected to a holding member 60. The holding member 60 includes a base 61 and two lugs 62 extend from the base 61. The horizontal plate 52 of the pressing plate 50 is rested on the base 61 and a pin 64 extends through two holes 621 in the two lugs 62, and the pin 64 is located on the horizontal plate 52 and stopped by the ridge 521 on the horizontal plate 52. The holding member 60 includes an extension plate 63 which includes two holes 631.

A positioning bar 40 has a cam section 41 which extends through a hole 221 in a first protrusion 222 on one of the side plates 22 and a second a hole 223 defined through a second protrusion on the other side plate 22. The cam section 41 includes a cam surface 411 which is located between the two side plates 22 and a pin is used to penetrate a passage 224 in the second protrusion and a hole in the distal end of the cam section 41. The cam section 41 can be rotated to press on an outer surface 511 of the pressing plate 51 by its rounded surface to press the second clamping member 30.

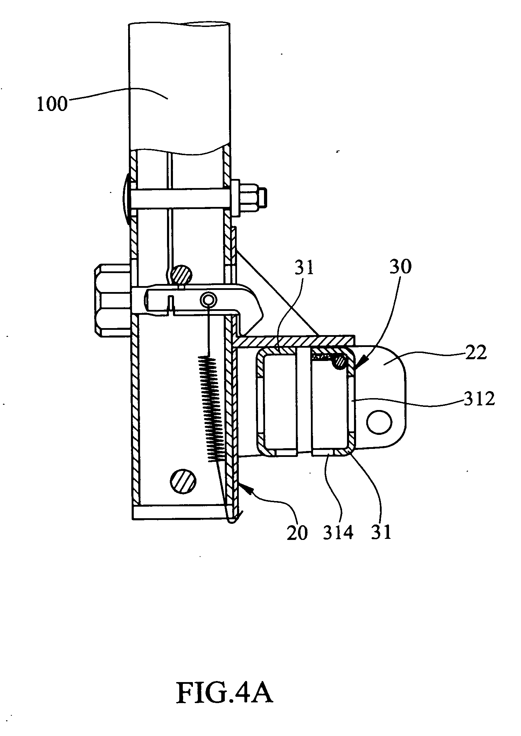

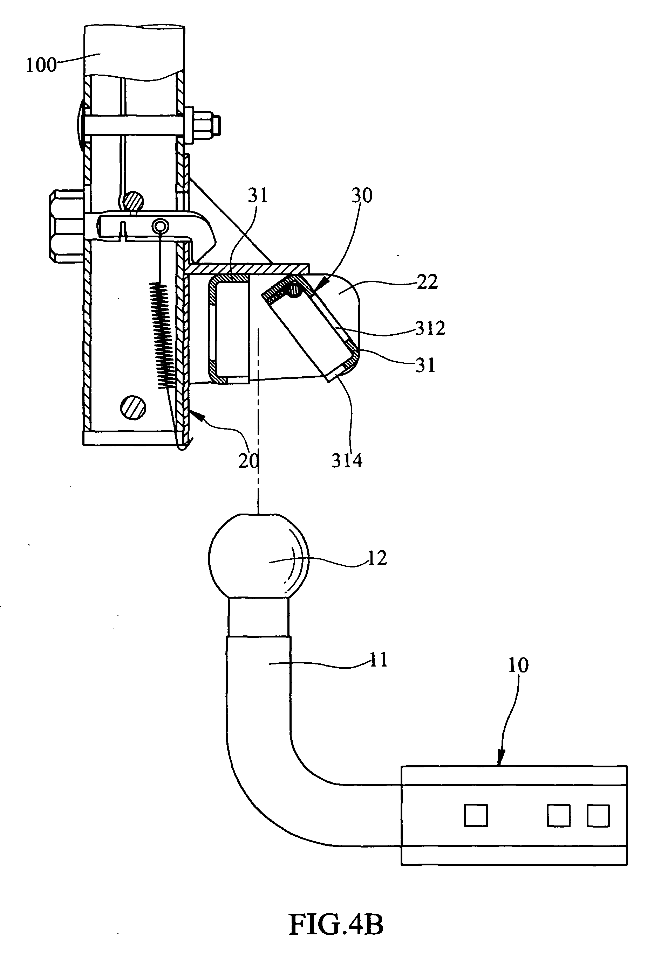

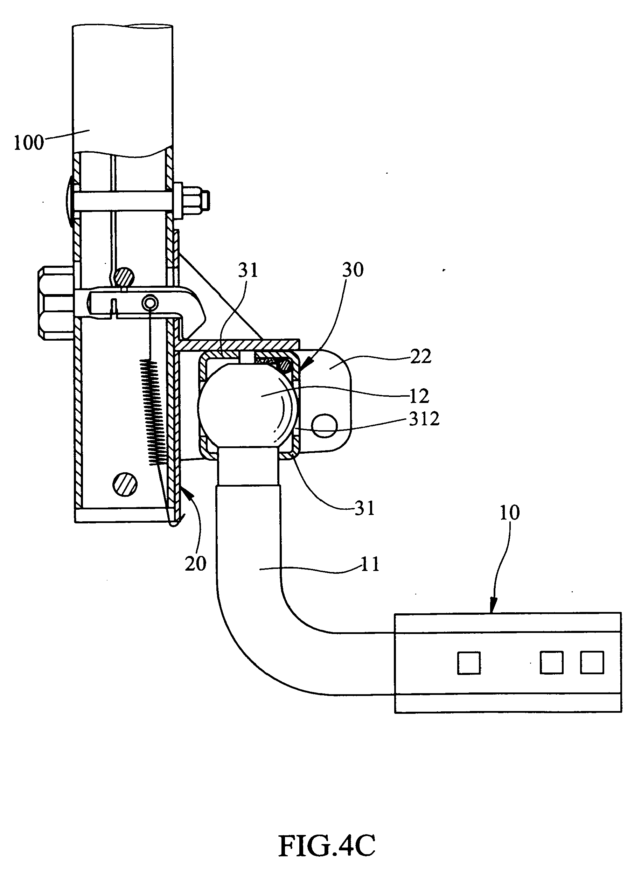

The ball 12 connected to a rod 11 of the connection member 10 is put between the two clamping members 31, 30 as shown in Figs.4A to 4C. The second clamping member 30 is first pivoted to allow the ball 12 to be inserted between the two clamping member 31, 30 and rod 11 is engaged with the recesses 314 of the two clamping members 31, 30 and the hole 312 allows a part of the ball 12 to be engaged therewith.

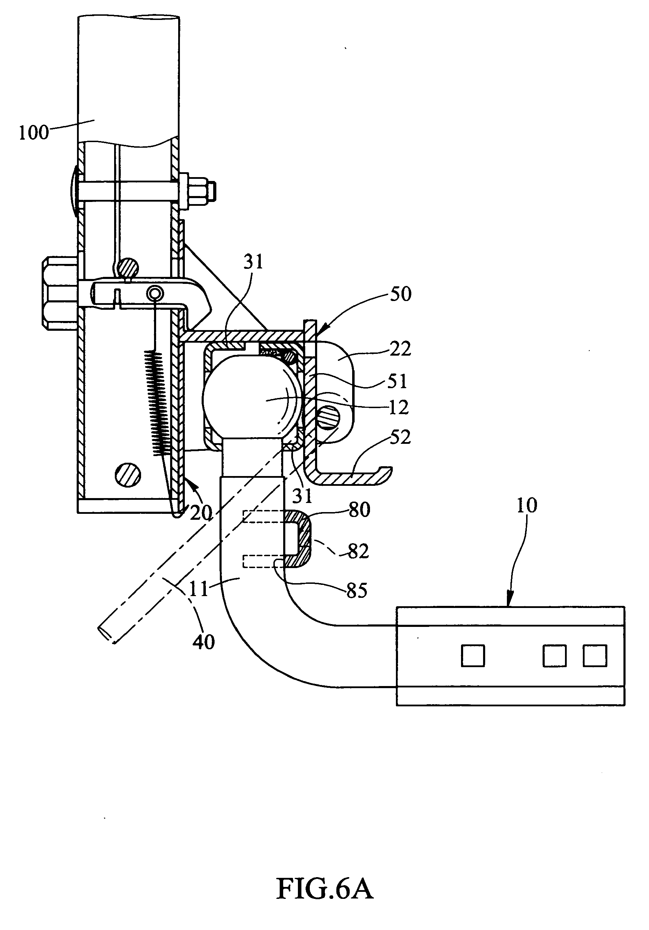

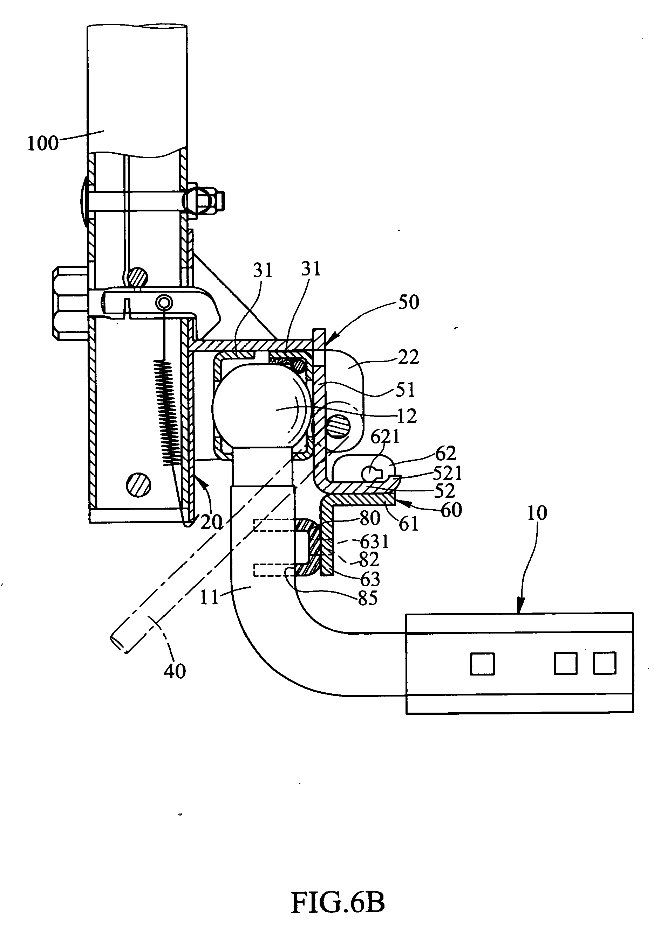

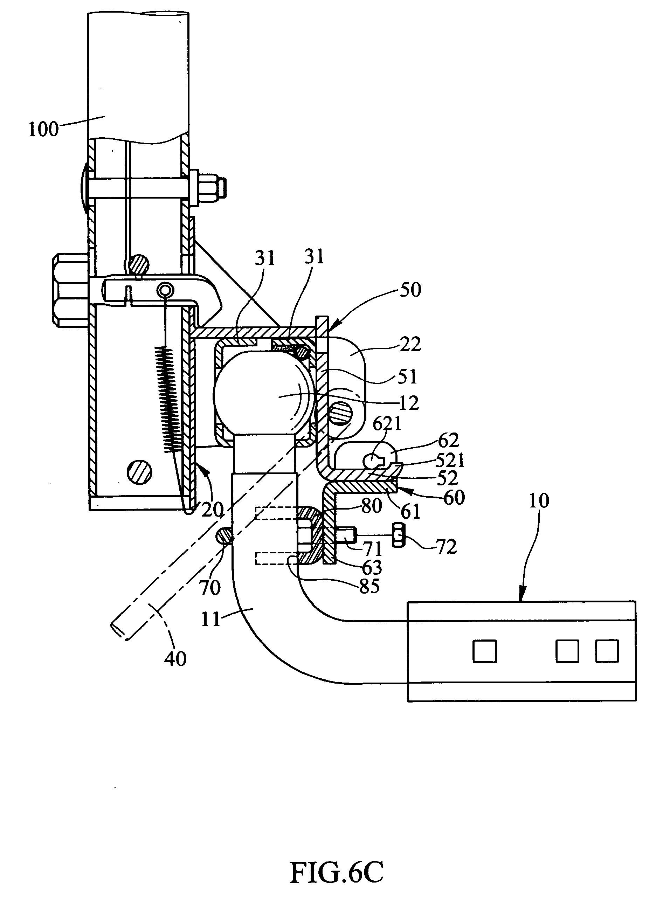

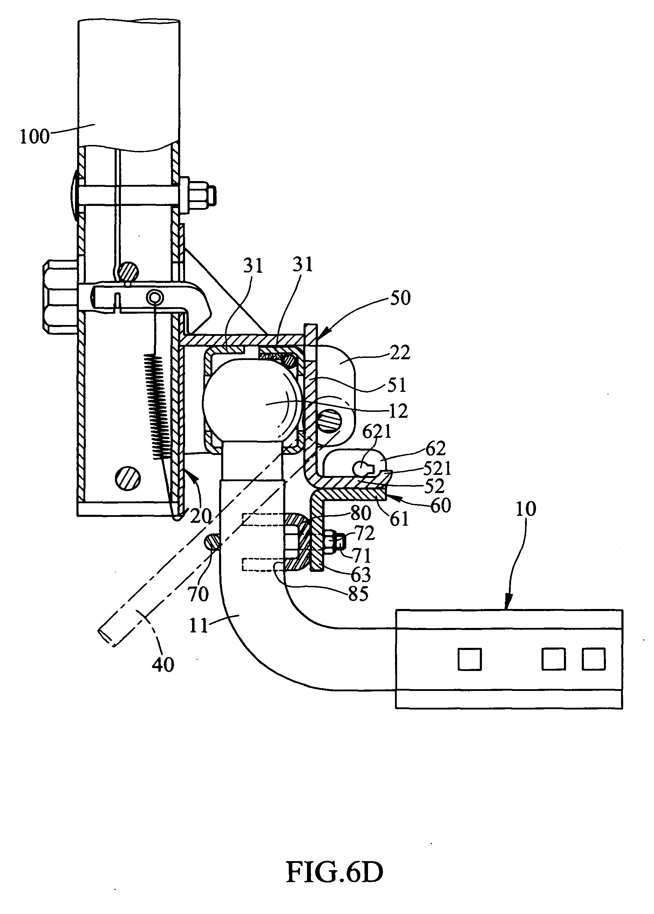

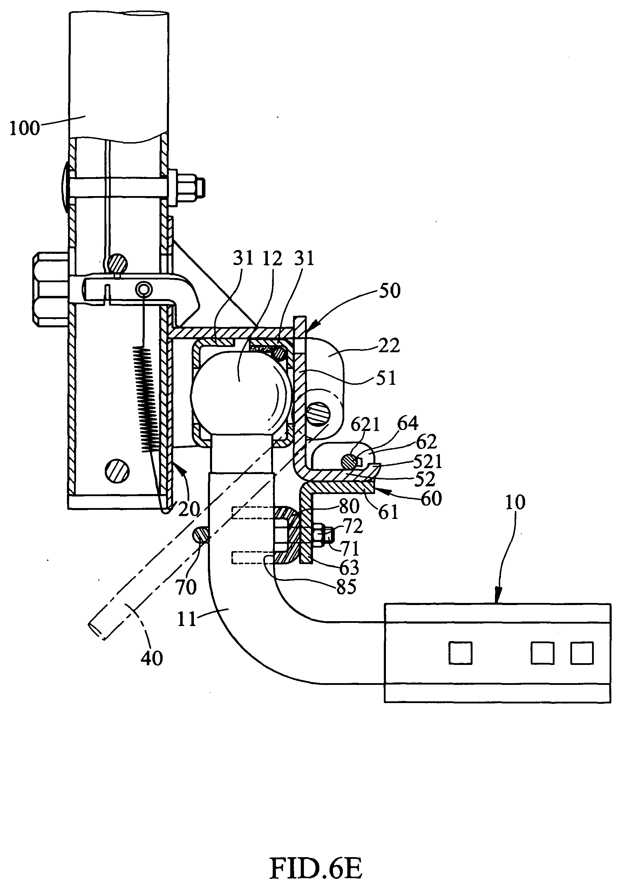

Referring to Figs. 6A t o 6E, a U -shaped retaining m ember 8 0 has a top plate 83, a bottom plate 84 and a connection plate 81 connected between the top plate 83 and the bottom plate 84. Each of the top plate 83 and the bottom plate 84 has a recess 85 with which the rod 11 is engaged. It is noted that the width of the bottom plate 84 can be shorter than the top plate 83 so as to perfectly match with the curvature of the rod 11. The recess 85 may have toothed periphery so as to more securely position the rod 11.

A U-shaped retaining piece 70 has two extensions and the rod 11 is engaged between the two extensions. The two extensions extend through holes 82 in the connection plate 81 of the retaining member 80 and the two holes 631 in the holding member 60. The two extensions of the U-shaped retaining piece 70 each have a threaded section 71 which is connected to one of the two nuts 72.

Accordingly, the rod 11 is positioned by the retaining member 80 and the ball 12 is positioned by the two clamping members 31, 30, such that the connection between the upright post 100 and the rod 11 is secured and the shaking can be efficiently reduced.

While we have shown and described the embodiment in accordance with the present invention, it should be clear to those skilled in the art that further embodiments may be made without departing from the scope of the present invention.

## Claims

1. A bicycle rack comprising:
a main frame (20) connected to an upright post (100) and having two side plates (22) between which a top plate (23) is connected, an extension tube connected to the upright post (100), at least one clamp device connected to the extension tube (101), a first clamping member (31) fixed between the two side plates (22) and a second clamping member (30) pivotably connected between the two side plates (22) so as to be adapted to clamp a ball (12) on a rod (11) between the first and second clamping members (31, 30), a pressing plate (50) having an upright plate (51) and a horizontal plate (52) which is connected to the upright plate (51), the upright plate (51) located between the two side plates (22) and the horizontal plate (52) connected to a holding member (60);
a positioning bar (40) having a cam section (411) which extends through the two side plates (22) and pressing on an outer surface (511) of the pressing plate (51);
a U-shaped retaining member (80) having a top plate (83), a bottom plate (84) and a connection plate (81) connected between the top plate (83) and the bottom plate (84), each of the top plate (83) and the bottom plate (84) having a recess (85) with which the rod (11) is engaged, and
a U-shaped retaining piece (70) having two extensions and the rod (11) being engaged between the two extensions, the two extensions extending through holes (82) in the connection plate (81) of the retaining member (80) and secured to the holding member (60).

2. The bicycle rack as claimed in claim 1, wherein the upright plate (51) of the pressing plate (50) has two protrusions (512) on two sides thereof and the two protrusions (512) are rested on two top edges of the two side plates (22).

3. The bicycle rack as claimed in claim 1, wherein the holding member (60) includes a base (61) and two lugs (62) extend from the base (61), the horizontal plate (52) of the pressing plate (50) is rested on the base (61) and a pin (64) extends through two holes (621) in the two lugs (62), the horizontal plate (52) includes a ridge (521) extending from a top surface thereof and the pin (64) is located on the horizontal plate (52) and stopped by the ridge (521) on the horizontal plate (52).

4. The bicycle rack as claimed in claim 1, wherein the holding member (60) includes an extension plate (63) which includes two holes (631) and the two extensions of the U-shaped retaining piece (70) extend through the two holes (631) and are connected with two nuts (72), the extension plate (63) is in contact with the connection plate (81) of the retaining member (80).

5. The bicycle rack as claimed in claim 4, wherein each of the two extensions of the holding member (60) has a threaded section (71) which is connected to one of the two nuts (72).
